# EUROPEAN PATENT APPLICATION

(11) **EP 4 542 968 A1**
(43) Date of publication of application: **23.04.2025**
(21) Application number: 23893217.2
(22) Date of filing: 17.07.2023
(51) Int. Cl.: H04L 67/12, H04B 7/22

(54) **TRANSMISSION METHOD FOR ENVIRONMENT REFLECTION, COMMUNICATION APPARATUS, AND STORAGE MEDIUM**

(30) Priority: 25.11.2022 CN 202211492440
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); GAO, Yuan, Shenzhen, Guangdong 518057 (CN); LU, Ting, Shenzhen, Guangdong 518057 (CN)
(74) Representative: Ziebig Hengelhaupt Intellectual Property Attorneys Patentanwaltskanzlei PartGmbB
(86) International application number: PCT/CN2023/107771
(87) International publication number: WO 2024/109117

(57) **Abstract**

Provided are a transmission method for environment reflection, a communication apparatus and a storage medium. The transmission method comprises: an environment reflection function module in a core network transmits information related to an environment reflection service.

## Description

The present disclosure claims a priority to Chinese Patent Application No. 202211492440.4, filed on November 25, 2022, the disclosure of which is hereby incorporated by reference in its entirety.

### TECHNICAL FIELD

The present disclosure relates to the field of technology of the Internet of Things, and in particular, to a transmission method for ambient backscatter, a communication apparatus, and a storage medium.

### BACKGROUND

With the rapid development of the information industry, the application of the Internet of Things (IoT) is becoming more and more extensive. As an adequate integration and comprehensive application of new generation of information technologies, the Internet of Things has characteristics of strong penetration, great driving effect, and good comprehensive benefits, which can meet the communication needs in many scenarios.

### SUMMARY

In one aspect, a transmission method for ambient backscatter is provided in some embodiments of the present disclosure, where the transmission method includes: transmitting, by an ambient backscatter function module in a core network, information related to an ambient backscatter service.

In another aspect, a communication apparatus is provided in some embodiments of the present disclosure, where the communication apparatus includes: a memory and a processor; the memory and the processor are coupled; the memory is configured to store instructions executable by the processor; when the processor executes the instructions, the communication apparatus implements the transmission method for ambient backscatter according to any of the above embodiments.

In yet another aspect, a computer-readable storage medium is provided in some embodiments of the present disclosure, where the computer-readable storage medium has stored computer program instructions thereon, when the computer program instructions are executed by a computer, the transmission method for ambient backscatter according to any of the above embodiments is implemented.

In yet another aspect, a computer program product is provided in some embodiments of the present disclosure, where the computer program product includes computer program instructions, when the computer program instructions are executed by a processor, the transmission method for ambient backscatter according to any of the above embodiments is implemented.

### BRIEF DESCRIPTION OF THE DRAWINGS

In order to illustrate technical solutions in the present disclosure more clearly, the accompanying drawings needed to be used in the embodiments of the present disclosure will be introduced briefly. Obviously, the described accompanying drawings below are merely accompanying drawings of some embodiments of the present disclosure, and other accompanying drawings may be obtained according to these accompanying drawings for a person of ordinary skill in the art.
FIG. 1 is a structural diagram of an ambient backscatter system according to some embodiments.
FIG. 2 is a structural diagram of another ambient backscatter system according to some embodiments.
FIG. 3 is a flowchart of a transmission method for ambient backscatter according to some embodiments.
FIG. 4 is a schematic diagram of an architecture of a protocol stack of a communication system according to some embodiments.
FIG. 5 is a flowchart of another transmission method for ambient backscatter according to some embodiments.
FIG. 6 is a flowchart of yet another transmission method for ambient backscatter according to some embodiments.
FIG. 7 is a flowchart of yet another transmission method for ambient backscatter according to some embodiments.
FIG. 8 is a flowchart of yet another transmission method for ambient backscatter according to some embodiments.
FIG. 9 is a flowchart of yet another transmission method for ambient backscatter according to some embodiments.
FIG. 10 is a flowchart of yet another transmission method for ambient backscatter according to some embodiments.
FIG. 11 is a flowchart of yet another transmission method for ambient backscatter according to some embodiments.
FIG. 12 is a flowchart of yet another transmission method for ambient backscatter according to some embodiments.
FIG. 13 is a schematic diagram of an architecture of a communication system according to some embodiments.
FIG. 14 is a schematic diagram of an architecture of another communication system according to some embodiments.
FIG. 15 is a schematic diagram of an architecture of yet another communication system according to some embodiments.
FIG. 16 is a schematic diagram of an architecture of yet another communication system according to some embodiments.
FIG. 17 is a flowchart of yet another transmission method for ambient backscatter according to some embodiments.
FIG. 18 is a flowchart of yet another transmission method for ambient backscatter according to some embodiments.
FIG. 19 is a flowchart of yet another transmission method for ambient backscatter according to some embodiments.
FIG. 20 is a flowchart of yet another transmission method for ambient backscatter according to some embodiments.
FIG. 21 is a flowchart of yet another transmission method for ambient backscatter according to some embodiments.
FIG. 22 is a flowchart of yet another transmission method for ambient backscatter according to some embodiments.
FIG. 23 is a flowchart of yet another transmission method for ambient backscatter according to some embodiments.
FIG. 24 is a flowchart of yet another transmission method for ambient backscatter according to some embodiments.
FIG. 25 is a flowchart of yet another transmission method for ambient backscatter according to some embodiments.
FIG. 26 is a structural diagram of a transmission apparatus for ambient backscatter according to some embodiments.
FIG. 27 is a structural diagram of a communication apparatus according to some embodiments.

### DETAILED DESCRIPTION

In order to enable those skilled in the art to better understand the technical solutions in the embodiments of the present disclosure, the technical solutions in the present disclosure will be described clearly and completely in conjunction with the accompanying drawings. Obviously, the described embodiments are merely a portion of embodiments of the present disclosure, but not all of embodiments of the present disclosure. All other embodiments obtained based on the embodiments of the present disclosure by those of ordinary skill in the art without paying any creative effort shall be included in the protection scope of the present disclosure.

It should be noted that in the present disclosure, wordings, such as "exemplarily" or "for example" and variations thereof are used to indicate examples, instances, or illustrations. Any embodiment or design solution described as "exemplarily" or "for example" in the present disclosure should not be illustrated as being more preferred or advantageous over other embodiments or design solutions. Specifically, the usage of the wordings such as "exemplarily" or "for example" is intended to present relevant concepts in a concrete way.

Hereinafter, terms such as "first" and "second" are used for descriptive purposes only, and are not to be understood as indicating or implying the relative importance or implicitly indicating the number of indicated technical features. Thus, features limited with the wordings such as "first" or "second" may explicitly or implicitly include one or more of the feature(s).

In the description of the present disclosure, unless otherwise specified, "/" means an "or" relationship, for example, "A/B" may represent A or B. The term "and/or" in the description is merely a relevant relationship for describing related objects, which represents that there may be three relationships. For example, A and/or B may represent: only A; only B; or both A and B. In addition, "at least one" represents one or more, and "a plurality of" represents more than two.

"At least one of A, B, or C" has the same meaning as "one or more of A, B, or C", which both include the following combinations of A, B, and C: only A; only B; only C; a combination of A and B; a combination of A and C; a combination of B and C; or a combination of A, B, and C.

As described in the background, with the rapid development of the information industry, the application of the Internet of Things is becoming more and more extensive. As a highly integrated and comprehensive application of new generation of information technology, the Internet of Things has characteristics of strong penetration, great driving effect, and good comprehensive benefit, which can meet the communication requirements in many scenarios.

In particular, the ambient Internet of Things, as a key communication technology for the development of the Internet of Things, adopts the ambient backscatter technology and ambient energy harvesting technology, which can effectively reduce power consumption and cost of communication, thereby making the Internet of Things widely applicable to a variety of scenarios. For example, the ambient Internet of Things may meet the communication requirements of the Internet of Things in some special scenarios (such as a harsh communication environment, a terminal form requirement for an extremely small size, and an extremely low-cost communication requirement of the Internet of Thing) that cannot be met by some other technologies of the Internet of Things (such as narrow band Internet of Things (narrow band internet of things, NB-loT) or machine-type communication (machine-type communication, MTC)).

However, in some technologies, the communication system cannot support relevant functions of such ambient Internet of Things. Thus, a transmission method for ambient backscatter is provided in the embodiments of the present disclosure, where the method includes: transmitting, by an ambient backscatter function module in a core network, information related to an ambient backscatter service. Based on this, the relevant functions of the ambient Internet of Things can be supported in the communication system by transmitting the information related to the ambient backscatter service, thereby reducing the power consumption and cost of communication.

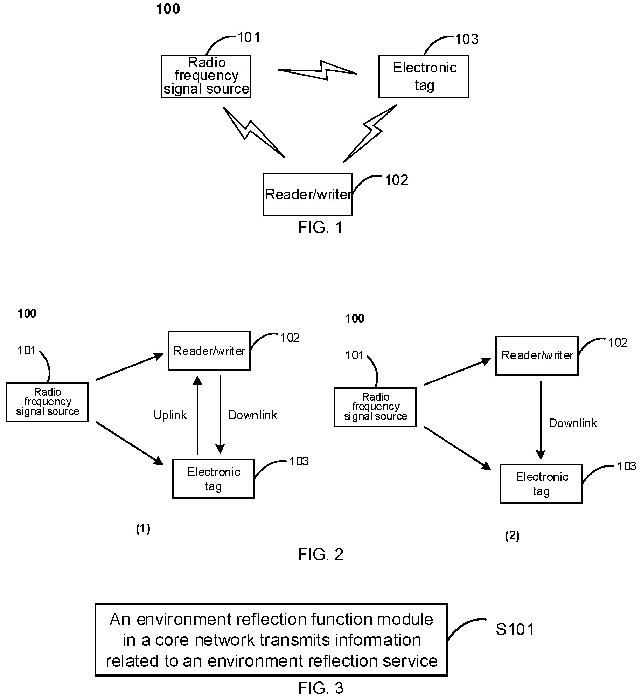

To facilitate understanding, the ambient backscatter technology used in the ambient Internet of Things is introduced first below. Referring to FIG. 1, an ambient backscatter system shown in FIG. 1 is a system that adopts ambient backscatter technology.

As shown in FIG. 1, the ambient backscatter system 100 includes: a radio frequency signal source 101, a reader/writer 102, and an electronic tag 103.

The radio frequency signal source 101 is an available environment radio frequency source, such as a broadcast television signal transmission tower, a mobile communication system base station, and a wireless fidelity (wireless fidelity, Wi-Fi) access point, etc., and a form of the radio frequency signal source is not limited in the present disclosure. In some embodiments, the radio frequency signal source 101 may send a wireless radio frequency signal within a communication frequency range.

The reader/writer 102 is also referred to as a receiver, and is configured to receive a signal sent from the radio frequency signal source 101 and/or a radio frequency signal reflected by the electronic tag 103.

The electronic tag 103 is also referred to as a transmitter, an ambient backscatter device, or an ambient backscatter terminal. In some embodiments, based on a wireless radio frequency signal sent from the radio frequency signal source 101, the electronic tag 103 may generate an induced current and then enter a working state. In some embodiments, the electronic tag 103 has two working states: a reflective state and a non-reflective state. For example, if the electronic tag 103 is in a reflective state, communication data to be sent may be converted into a binary sequence code, and the binary sequence code may be transmitted to the reader/writer 102 by changing an antenna state. Furthermore, when the communication data to be sent is a symbol obtained by adjusting with binary phase shift keying (binary phase shift keying, BPSK), the communication data includes a symbol "1" and a symbol "-1", and the electronic tag 103 may reflect different symbols based on different impedances or circuits. For example, the electronic tag 103 reflects the symbol "1" or the symbol "-1" respectively through two different impedances.

It can be understood that the communication principle of the ambient backscatter system 100 is mainly to complete communication by distinguishing the two states. i.e., a reflective state and a non-reflective state of the electronic tag 103. For example, when the electronic tag 103 is in the reflective state, the electronic tag 103 reflects a radio frequency signal received from the radio frequency signal source to the reader/writer 102. A model state of the ambient backscatter system 100 at this time is shown as (1) in FIG. 2, where an uplink and a downlink exist between the electronic tag 103 and the reader/writer 102. Alternatively, when the electronic tag 103 is in a non-reflective state, the electronic tag 103 keep a radio frequency signal received from the radio frequency signal source by controlling a change of an antenna, and does not reflect the radio frequency signal to the reader/writer 102. The model state of the ambient backscatter system 100 at this time is shown as (2) in FIG. 2, where only a downlink exists between the electronic tag 103 and the reader/writer 102.

It should be noted that the ambient backscatter system shown in FIG. 1 and FIG. 2 are merely for describing the technical solutions in the present disclosure more clearly, and do not constitute a limitation on the present disclosure. Those of ordinary skill in the art should understood that with the evolution of the network architecture and the emergence of new service scenarios, the technical solutions provided in the present disclosure are also applicable to similar technical problems.

The transmission method for ambient backscatter provided in the embodiments of the present disclosure may be applied to systems of various communication standards. For example, the transmission method for ambient backscatter provided in the embodiments of the present disclosure may be applicable to systems, including but not limited to, a long term evolution (long term evolution, LTE) system, various evolved versions based on LTE, a fifth generation (5th generation, 5G) system, and a new radio (NR) and other next generation communication systems. In addition, the transmission method for ambient backscatter provided in the embodiments of the present disclosure may also be applied to future-oriented communication technologies, etc.

FIG. 3 is a flowchart of a transmission method for ambient backscatter according to some embodiments. The method includes S101.

In S101, an ambient backscatter function module in a core network transmits information related to an ambient backscatter service.

In some embodiments, the ambient backscatter function module may have other names, such as an ambient backscatter function module, or an ambient backscatter management function module, or an ambient Internet of Things function module, etc., which are not limited thereto. The ambient backscatter service may have other names, such as an ambient backscatter service, or an ambient Internet of Things service, etc., which are not limited thereto.

In some embodiments, the ambient backscatter function module has a first function. The first function includes one or more of the following functions:
generating or decoding a data packet related to the ambient backscatter service;
triggering a process related to the ambient backscatter service;
transmitting the information related to the ambient backscatter service between the core network and a terminal;
providing auxiliary information related to the ambient backscatter service to a base station;
authenticating and/or authorizing a terminal that supports an ambient backscatter function;
encrypting and/or decrypting the data packet;
providing security information;
providing connection management for the ambient backscatter service; and
providing, for an access network, an interface service to access the core network.

In some embodiments, the ambient backscatter function module has a second function. The second function includes one or more of the following functions:
maintaining position information of a terminal;
maintaining information of a base station accessed by the terminal;
maintaining information of a cell accessed by the terminal;
maintaining information of a mobility management network element accessed by the terminal;
maintaining state information of the terminal; and
maintaining capability information of the terminal.

In some embodiments, the ambient backscatter function module has a third function. The third function includes one or more of the following functions:
receiving information from an external server related to the ambient backscatter service;
sending information to the external server;
providing information performed security protection to the core network; and
providing the external server with information about a network capability and an event.

In some embodiments, the ambient backscatter function module may be integrated with the mobility management network element. Based on this, the ambient backscatter function module can directly communicate with the base station.

In some embodiments, the ambient backscatter function module and the mobility management network element may be independently set. The ambient backscatter function module is provided with a service interface for communicating with the mobility management network element. Furthermore, the ambient backscatter function module can communicate with the base station through the mobility management network element.

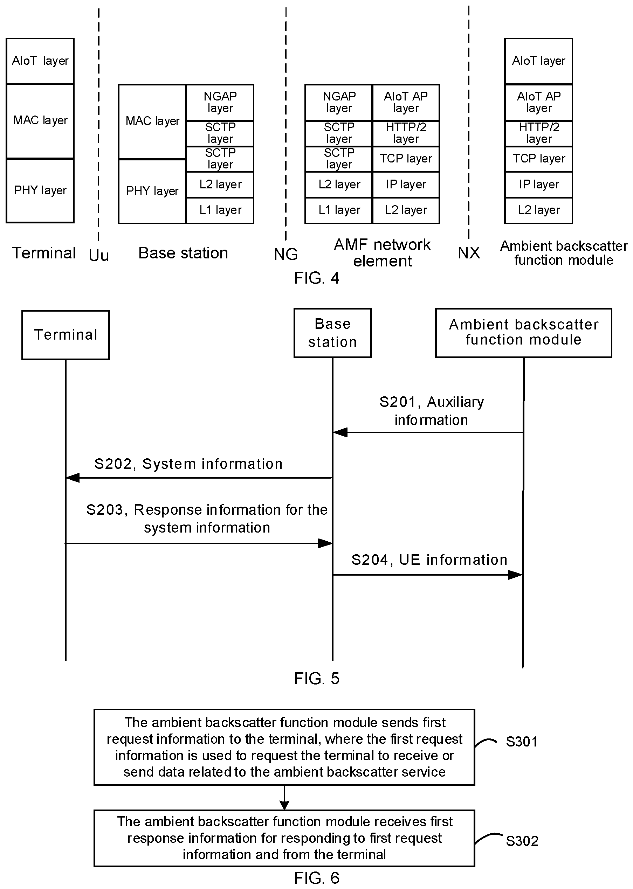

FIG. 4 is a schematic diagram of an architecture of a protocol stack of a communication system according to exemplary embodiments. In some embodiments, as shown in FIG. 4, the protocol stack of the ambient backscatter function module includes one or more of: L2 layer, Internet Protocol (internet protocol, IP) layer, transmission control protocol (transmission control protocol, TCP) layer, hypertext transfer protocol/2 (hypertext transfer protocol/2, HTTP/2) layer, Internet of Things protocol application (ambient Internet of Things application protocol, AloT AP) layer and Internet of Things protocol (ambient internet of things, AloT) layer. The AloT AP layer is used to provide an interface service between the ambient backscatter function module and the mobility management network element, and the AloT layer is used to provide an interface service between the ambient backscatter function module and a terminal.

A protocol stack of a service interface (i.e., an NX interface) that enables a communication between an access and mobility management function (access and mobility management function, AMF) network element and the ambient backscatter function module includes one or more of: L2 layer, IP layer, TCP layer, HTTP/2 layer, and Internet of Things protocol application layer.

A protocol stack of a service interface (i.e., an NG interface) that enables a communication between the AMF network element and the base station includes one or more of: L1 layer, L2 layer, IP layer, stream control transmission protocol (stream control transmission protocol, SCTP) layer, and next generation application protocol (next generation application protocol, NGAP) layer.

A protocol stack of a service interface (i.e., a Uu interface) that enables a communication between the base station and the terminal includes: a physical layer protocol (physical layer protocol, PHY) and/or a media access control (media access control, MAC) layer.

A protocol stack of the terminal includes one or more of: PHY layer, MAC layer, and AloT layer. The AloT layer is used to provide an interface service between the ambient backscatter function module and the terminal.

In some embodiments, the ambient backscatter function module may trigger a paging process for the terminal by transmitting the information related to the ambient backscatter service. For example, as shown in FIG. 5, S101 may be implemented as S201, and after S201, the paging process further includes S202 to S204.

In S201, the ambient backscatter function module sends the auxiliary information related to the ambient backscatter service to the base station.

In some examples, the auxiliary information related to the ambient backscatter service includes one or more of: information of a time domain resource occupied for sending the auxiliary information or a paging message, information of a frequency domain resource occupied for sending the auxiliary information or the paging message, information related to a terminal that is paged or receives the auxiliary information, network information, the security information, configuration information of a broadcast mode, access configuration information, and a format of response information.

The information of the time domain resource includes one or more of: a sampling period, a frame structure, a symbol length, or a cyclic prefix (cyclic prefix, CP) length.

The information of the frequency domain resource includes one or more of: a frequency interval and a bandwidth of a subcarrier or a sub-channel, or an available range of a subcarrier or a sub-channel (for example, a bitmap of a subcarrier or a sub-channel in an idle state, and a total number of subcarriers or sub-channels in an idle state, etc.).

The information related to the terminal that is paged or receives the auxiliary information includes one or more of: all or part of terminal identification, and a terminal type.

The network information includes: an identification of network and/or a network type.

The security information includes one or more of: a key, an algorithm of encryption or decryption, and an indication of whether to encrypt or not.

The configuration information of the broadcast mode includes one or more of: a broadcast type, a broadcast period, an indication to start broadcasting, and a relationship mapping to system information (system information, SI).

The access configuration information includes: information for indicating whether a communication network allows a terminal device to access, and/or information for indicating a type of a terminal that the communication network allows to access.

In some examples, before sending the auxiliary information to the base station, the ambient backscatter function module further generates the auxiliary information related to the ambient backscatter service.

In some examples, before sending the auxiliary information to the base station, the ambient backscatter function module further encrypts the auxiliary information related to the ambient backscatter service. Therefore, what the ambient backscatter function module sends out is encrypted auxiliary information.

In some examples, the base station may also be replaced as other forms of access network device, such as an access point, etc., which is not limited in the embodiments of the present disclosure, and will not be repeated below.

In some examples, the ambient backscatter function module is a function module in the core network, and the ambient backscatter function module sends the auxiliary information related to the ambient backscatter service to the base station through an interface between the core network and the base station.

As an example, in a case where the ambient backscatter function module is integrated with the mobility management network element, the ambient backscatter function module may directly send the auxiliary information related to the ambient backscatter service to the base station.

As another example, in a case where the ambient backscatter function module and the access and mobility management function network element are independently set, the ambient backscatter function module sends the auxiliary information related to the ambient backscatter service to the base station through the access and mobility management function network element. That is, the ambient backscatter function module sends the auxiliary information related to the ambient backscatter service to the access and mobility management function network element; then, the access and mobility management function network element sends the auxiliary information related to the ambient backscatter service to the base station.

In S202, the base station sends system information to the terminal.

The system information includes one or more of: time domain resource information, frequency domain resource information, terminal information, the network information, the security information, the configuration information of the broadcast mode, the access configuration information, and a format of paging response information. It can be understood that information carried by the system information may be the same as or different from information carried by the auxiliary information.

In some examples, the system information is generated based on the auxiliary information.

In some examples, the base station encapsulates part or all of the information carried by the auxiliary information into a system information block (system information block, SIB) in the system information, and sends the encapsulated system information to the terminal.

In S203, the terminal sends response information for the system information to the base station. The response information for the system information includes a UE message.

In some examples, if the terminal matches the terminal information carried in the system information, the terminal sends the response information for the system information to the base station.

In some examples, the response information for the system information includes one or more of: terminal information of a paged terminal, data information, and protocol data unit (protocol data unit, PDU) information.

In some embodiments, the protocol data unit information may include an encrypted data packet, where the encrypted data packet may include a UE message.

In S204, the base station sends UE information fed back from the terminal to the ambient backscatter function module. Correspondingly, the ambient backscatter function module receives the UE message.

In some examples, after receiving the auxiliary information related to the ambient backscatter service, the base station pages a terminal (e.g., an ambient backscatter terminal) within a coverage range of the base station, and after paging the terminal, sends a UE message to the ambient backscatter function module based on a paging result.

In some examples, the UE message includes information related to the terminal and data information. For example, the UE message may include information related to a paged terminal and data information.

In some embodiments, the information related to the paged terminal may include one or more of: all or part of terminal identification, a random number, and a terminal type. The random number is used for security protection, such as encryption protection, integrity protection, etc.

In some embodiments, the data information may include data that needs to be reported by the paged terminal.

It can be seen that the embodiments shown in FIG. 5 can implement paging of an ambient backscatter terminal, so as to support the application of the ambient Internet of Things in a communication system.

In some embodiments, the ambient backscatter function module may trigger an accessing process for the terminal by transmitting the information related to the ambient backscatter service. For example, as shown in FIG. 6, S101 may be implemented as S301, and after S301, the method further includes S302.

In S301, the ambient backscatter function module sends first request information to the terminal, where the first request information is used to request the terminal to receive or send data related to the ambient backscatter service.

In some examples, the first request information includes one or more of: information related to the terminal, configuration information for data requested to be reported by the terminal, configuration information for data requested to be stored by the terminal, or configuration information for a behavior requested to be performed by the terminal.

The information related to the terminal may include one or more of: a terminal identification, part of the terminal identification, or a terminal type.

The configuration information for the data requested to be reported by the terminal includes one or more of: a data type of the data requested to be reported by the terminal, a storage position of the data requested to be reported by the terminal, a data volume of the data requested to be reported by the terminal, or a data content of the data requested to be reported by the terminal.

The configuration information for the data requested to be stored by the terminal includes one or more of: a data type of the data requested to be stored by the terminal, a storage position of the data requested to be stored by the terminal, a data volume of the data requested to be stored by the terminal, or a data content of the data requested to be stored by the terminal.

The configuration information for the behavior requested to be performed by the terminal includes one or more of: a behavior type of the behavior requested to be performed by the terminal, and/or a storage position of the behavior requested to be performed by the terminal.

In some examples, the first request information further includes the PDU information, where the PDU information includes an encrypted data packet, and the encrypted data packet may include one or more of: the information related to the terminal, the configuration information for the data requested to be reported by the terminal, the configuration information for the data requested to be stored by the terminal, or the configuration information for the behavior requested to be performed by the terminal.

In S302, the ambient backscatter function module receives first response information for responding to first request information and from the terminal.

In some examples, the first response information includes one or more of: the information related to the terminal, reported data, a success indication or a failure indication.

The reported data includes one or more of: a data type of the reported data, a storage position of the reported data, a data volume of the reported data, and a data content of the reported data.

In some examples, the first response information includes PDU information, where the PDU information may include an encrypted data packet, and the encrypted data packet may include one or more of: the information related to the terminal, the reported data, the success indication or the failure indication.

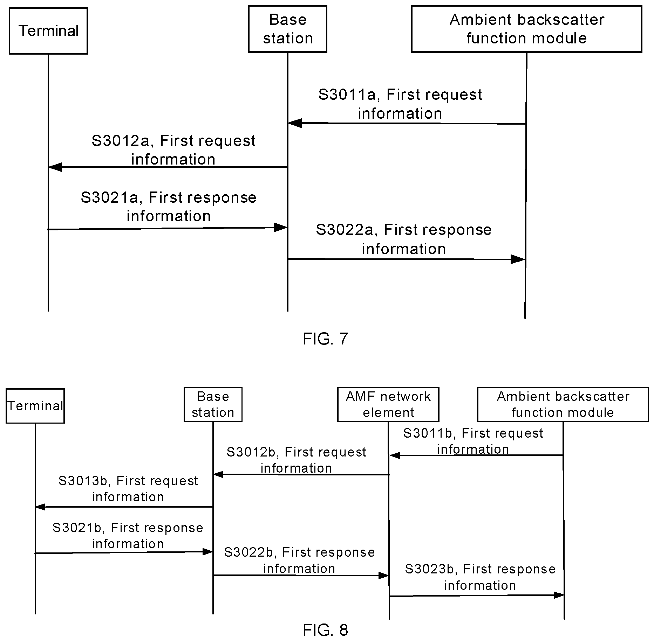

In some embodiments, in a case where the ambient backscatter function module is integrated with the access and mobility management function network element, as shown in FIG. 7, the above S301 may be, for example, implemented as S3011a and S3012a.

In S3011a, the ambient backscatter function module sends the first request information to the base station.

In S3012a, the base station sends the first request information to the terminal.

In some embodiments, the first request information may be carried in a downlink dedicated message.

As still shown in FIG. 7, the above S302 may be, for example, implemented as S3021a and S3022a.

In S3021a, the base station receives the first response information from the terminal.

In some embodiments, the first response information may be carried in an uplink dedicated message.

In S3022a, the ambient backscatter function module receives the first response information of terminal for responding to the first request information and sent from the base station.

In some embodiments, in a case where the ambient backscatter function module and the access and mobility management function network element are independent from each other, as shown in FIG. 8, the above S301 may be, for example, implemented as S3011b to S3013b.

In S3011b, the ambient backscatter function module sends the first request information to the access and mobility management function network element, where the first request information is used to request the terminal to receive or send data related to the ambient backscatter service.

In S3012b, the access and mobility management function network element sends the first request information to the base station.

In S3013b, the base station sends the first request information to the terminal.

As still shown in FIG. 8, the above S302 may be, for example, implemented as S3021b to S3023b.

In S3021b, the base station receives the first response information of the terminal.

In S3022b, the access and mobility management function network element receives the first response information from the base station.

In S3023b, the ambient backscatter function module receives the first response information from the access and mobility management function network element.

Based on this, an access of the terminal can be achieved, so as to support the application of the ambient Internet of Things in the communication system.

In some embodiments, the above-mentioned paging process and the accessing process may be performed simultaneously.

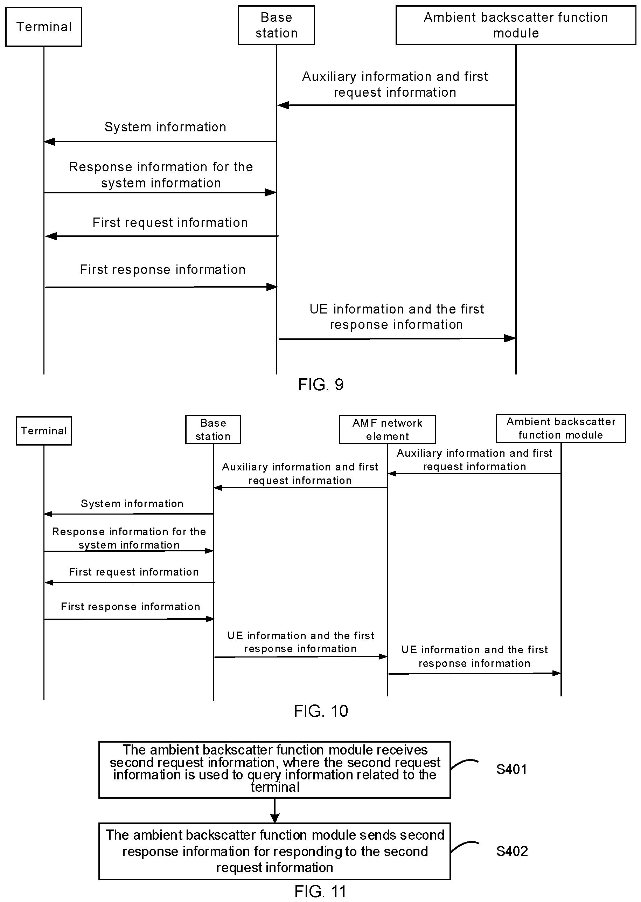

For example, in a case where the ambient backscatter function module is integrated with the access and mobility management function network element, as shown in FIG. 9, a method for performing a paging process and an accessing process simultaneously is provided in the exemplary embodiments of the present disclosure.

Referring to FIG. 9, the ambient backscatter function module sends the auxiliary information and the first request information to the base station. The base station sends the system information to the terminal according to the auxiliary information. The base station receives response information for the system information from the terminal, where the response information for the system information above includes UE information fed back from the terminal. Further, the base station sends the first request information to the terminal, where the first request information is used to request the terminal to access. In some embodiments, the first request information may be carried in a downlink dedicated message of the base station. The base station receives the first response information from the terminal, where the first response information is used to respond to the first request information. In some embodiments, the first response information may be carried in an uplink dedicated message of the terminal. The ambient backscatter function module receives the first response information and the UE information from the base station.

Based on this, a terminal paging and a terminal accessing can be performed simultaneously in a case where the ambient backscatter function module is integrated with the access and mobility management function network element.

For example, in a case where the ambient backscatter function module and the access and mobility management function network element are independent from each other, as shown in FIG. 10, a method for performing a paging process and an accessing process simultaneously is provided in the exemplary embodiments of the present disclosure.

Referring to FIG. 10, the ambient backscatter function module sends the auxiliary information and the first request information to the access and mobility management function network element. The access and mobility management function network element sends the auxiliary information and the first request information to the base station. The base station sends system information to the terminal according to the auxiliary information. The base station receives response information for the system information from the terminal, where the response information for the system information above includes UE information fed back from the terminal. Further, the base station sends the first request information to the terminal, where the first request information is used to request the terminal to access. In some embodiments, the first request information may be carried in a downlink dedicated message of the base station. The base station receives the first response information from the terminal, where the first response information is used to respond to the first request information. In some embodiments, the first response information may be carried in an uplink dedicated message of the terminal. The base station sends the first response information and the UE information to the access and mobility management function network element. The ambient backscatter function module receives the first response information and the UE information from the access and mobility management function network element.

Based on this, the terminal paging and the terminal accessing can be performed simultaneously in a case where the ambient backscatter function module and the access and mobility management function network element are independent from each other.

In some embodiments, in a case where the ambient backscatter function module is provided with a second function, the ambient backscatter function module may transmit the information related to the ambient backscatter service, to enable other network elements to query information related to the ambient backscatter service and of a terminal. For example, as shown in FIG. 11, S101 may be implemented as S401 to S402.

In S401, the ambient backscatter function module receives second request information, where the second request information is used to query information related to the terminal.

In some examples, the second request information is used to query one or more of the following information: position information of the terminal, information of a base station accessed by the terminal, information of a cell accessed by the terminal, information of an access and mobility management function network element accessed by the terminal, state information of the terminal, or capability information of the terminal.

In S402, the ambient backscatter function module sends second response information for responding to the second request information.

In some examples, the second response information includes one or more of: the position information of the terminal, the information of the base station accessed by the terminal, the information of the cell accessed by the terminal, the information of the access and mobility management function network element accessed by the terminal, the state information of the terminal, or the capability information of the terminal.

In some examples, the second response information further includes a success indication or failure indication in response to the second request information.

Based on the method shown in FIG. 11, the terminal information may be maintained, to support the application of the ambient Internet of Things in the communication system.

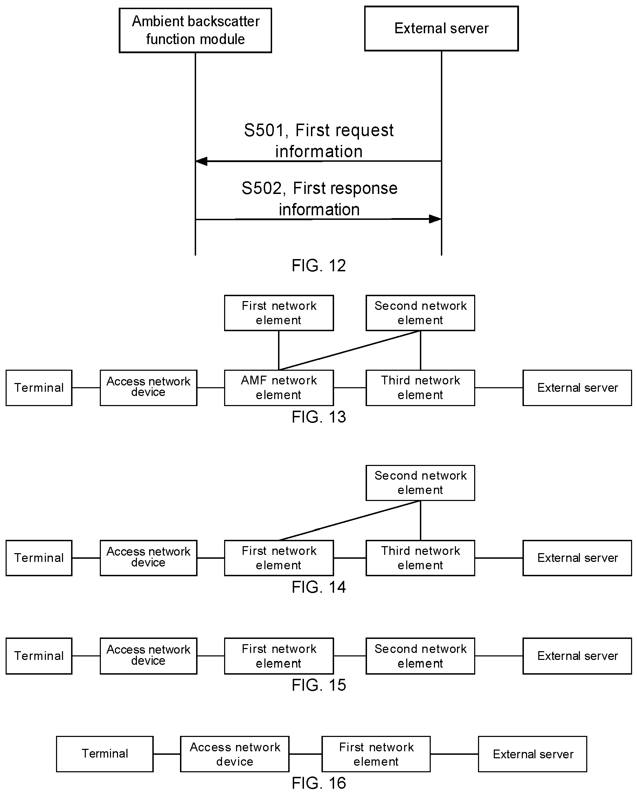

In some embodiments, in a case where the ambient backscatter function module is provided with a third function, the ambient backscatter function module may communicate with an external server by transmitting the information related to the ambient backscatter service. For example, as shown in FIG. 12, S101 may be implemented as S501, and the above method further includes S502.

In S501, the ambient backscatter function module receives first request information from an external server.

In some examples, the first request information includes one or more of: information related to a terminal, configuration information for data requested to be reported by the terminal, configuration information for data requested to be stored by the terminal, or configuration information for a behavior requested to be performed by the terminal.

The first request information can refer to the description in above S301, which will not be repeated herein.

In some examples, the ambient backscatter function module may receive a first request message in a first format from the external server, and convert the first request message in the first format into first request information in a second format, so as to convert information of the external server into information inside the core network. The first format is a message format supported by the external server, and the second format is a message format supported by the core network.

In S502, the ambient backscatter function module sends first response information for responding to the first request information to the external server.

The first response message includes one or more of: information related to the terminal, reported data, a success indication, or a failure indication.

The first response information can refer to the description in above S302, which will not be repeated herein.

Based on this, a communication with an external server can be implemented, so that in a remote control scenario, the external server (such as an loT server) can control a remote terminal, so as to support the application of the ambient Internet of Things in the communication system.

FIG. 13 is a schematic diagram of an architecture of a communication system according to some exemplary embodiments. As shown in FIG. 13, the communication system includes: a terminal, an access network device, a first network element, a second network element, a third network element, an access and mobility management function network element, and an external server. The communication system shown in FIG. 13 is illustrated by taking the first network element as an ambient backscatter function module with a first function, the second network element as an ambient backscatter function module with a second function, and the third network element as an ambient backscatter function module provided a third function as an example below.

The terminal may also be referred to as a terminal device, a user equipment, a mobile station, a mobile terminal, etc. In some embodiments, the terminal is an ambient backscatter terminal, such as a reader/writer or an electronic tag in an ambient backscatter system. In addition, the terminal may also be a mobile phone, a tablet computer, a computer with wireless transceiver function, a virtual reality terminal, an augmented reality terminal, a wireless terminal in industrial control, a wireless terminal in self driving, a wireless terminal in remote surgery, a wireless terminal in transportation safety, a wireless terminal in smart city, a wireless terminal in smart home, etc. A device form adopted by the terminal is not limited in the embodiments of the present disclosure.

The access network device may be configured to implement a wireless access control function for the terminal. In some embodiments, the access network device may also be configured to implement functions such as resource scheduling for the terminal, terminal paging, terminal accessing, terminal maintenance or wireless resource management. In some embodiments, the access network device may be a radio frequency signal source in the ambient backscatter system. In some embodiments, the access network device may be base stations in various forms, such as a macro base station, a micro base station (also referred to as a small station), a relay station, a wireless access point, a transmission receive point (transmission receive point, TRP), a transmission point (transmission point, TP), or any node of other access nodes. In systems using different radio access technologies, names of devices with functions of a base station may be different. For example, in the 5th generation system, such device is called as a RAN (radio access network). In a LTE system, such device is called as an evolved NodeB (evolved NodeB, eNB or eNodeB). In the third generation (3rd generation, 3G) system, such device is called as a Node B, etc.

In some embodiments, the first network element may implement the first function. The first function includes one or more of: generating or decoding a data packet related to the ambient backscatter service; triggering a process related to the ambient backscatter service; transmitting the information related to the ambient backscatter service between the core network and a terminal; providing auxiliary information related to the ambient backscatter service to a base station; authenticating and/or authorizing a terminal that supports an ambient backscatter function; encrypting and/or decrypting the data packet; providing security information; providing connection management for the ambient backscatter service; or providing, for an access network, an interface service to access the core network.

In some embodiments, the second network element may implement the second function. The second function includes one or more of: maintaining position information of a terminal; maintaining information of a base station accessed by the terminal; maintaining information of a cell accessed by the terminal; maintaining information of a mobility management network element accessed by the terminal; maintaining state information of the terminal; and maintaining capability information of the terminal.

In some embodiments, there is a communication connection between the third network element and the second network element. The third network element may implement the third function. The third function includes one or more of: receiving information from an external server and related to the ambient backscatter service; sending information to the external server; providing information performed security protection to the core network; or providing the external server with information about a network capability and an event.

In some embodiments, the access and mobility management function network element belongs to network elements of the core network and is mainly responsible for signaling processing, such as access control, mobility management, attachment and detachment, and gateway selection, or other functions. In a case where the access and mobility management function network element provides a service for a session in the terminal, the access and mobility management function network element may provide a storage resource of a control plane for the session, so as to store a session identification, a session management network element identification associated with the session identification, or the like. In some examples, the access and mobility management function network element assists the first network element, the second network element, or the third network element in transmitting information related to an ambient backscatter service. For example, the access and mobility management function network element may assist the first network element to perform connection management, terminal authentication or encryption, or the like. Referring to FIG. 13, there are communication connections between the access and mobility management function network element and the first network element, the second network element and the third network element.

In some embodiments, the external server is an agent or a server of a user, which is configured to assist the user in implementing a remote control for the terminal. In some examples, the external server is an IoT server.

It should be noted that the structure of the communication system shown in FIG. 13 is merely an example. In actual implementation, the first network element, the second network element, the third network element and the access and mobility management function network element may be deployed independently, or multiple network elements in the first network element, the second network element, the third network element and the access and mobility management function network element may be deployed together.

In addition, the implementation of the above-mentioned first function, second function, third function and the function of the access and mobility management function network element is not limited to fixed network elements. For example, the above-mentioned first function may also be possessed by the second network element. For another example, the function of the access and mobility management function network element may also be possessed by the first network element, which are not limited in the present disclosure. The implementation of the above-mentioned first function, second function, third function and the function of the access and mobility management function network element may be the implementation of all functions or the implementation of a portion of the functions. For example, the communication system may not implement the second function, which are not limited in the present disclosure either. For ease of understanding, possible implementations of the above-mentioned first function, second function, third function, and the function of the access and mobility management function network element in various network elements are described exemplarily below.

FIG. 14 is a schematic diagram of an architecture of another communication system according to some exemplary embodiments. As shown in FIG. 14, the communication system includes: a terminal, an access network device, a first network element, a second network element, a third network element, and an external server. In the architecture shown in FIG. 14, the first network element is provided with a first function, the second network element is provided with a second function, and the third network element is provided with a third function. Alternatively, the first network element is provided with a function of an access and mobility management function network element, the second network element is provided with the first function and the second function, and the third network element is provided with the third function. Alternatively, the first network element is provided with the function of the access and mobility management function network element, the second network element is provided with the first function, and the third network element is provided with the second function and the third function. Alternatively, the first network element is provided with the function of the access and mobility management function network element and the first function, the second network element is provided with the second function, and the third network element is provided with the third function.

It can be understood that, in the communication system shown in FIG. 14, the first network element and the third network element are connected. Information or a data packet of a service of ambient Internet of Things can be transmitted between the first network element and the third network element.

FIG. 15 is a schematic diagram of an architecture of yet another communication system according to some exemplary embodiments. As shown in FIG. 15, the communication system includes: a terminal, an access network device, a first network element, a second network element, and an external server. In the architecture shown in FIG. 15, the first network element is provided with a first function, and the second network element is provided with a third function. Alternatively, the first network element is provided with the first function and a second function, and the second network element is provided with the third function. Alternatively, the first network element is provided with the first function and the third function, and the second network element is provided with the second function. Alternatively, the first network element is provided with the first function, and the second network element is provided with the third function and the second function.

FIG. 16 is a schematic diagram of an architecture of yet another communication system according to some exemplary embodiments. As shown in FIG. 16, the communication system includes: a terminal, an access network device, a first network element, and an external server. In the architecture shown in FIG. 16, the first network element is provided with a first function, a third function, a second function, and a function of an access and mobility management function network element.

It should be noted that the communication systems shown in FIG. 13 to FIG. 15 are merely for describing the technical solutions in the present disclosure more clearly, and do not constitute a limitation on the present disclosure. Those of ordinary skill in the art should understood that with the evolution of the network architecture and the emergence of new service scenarios, the technical solutions provided in the present disclosure are also applicable to similar technical problems.

A transmission method for ambient backscatter provided in the embodiments of the present disclosure are illustrated below in combination with different architectures of the communication system.

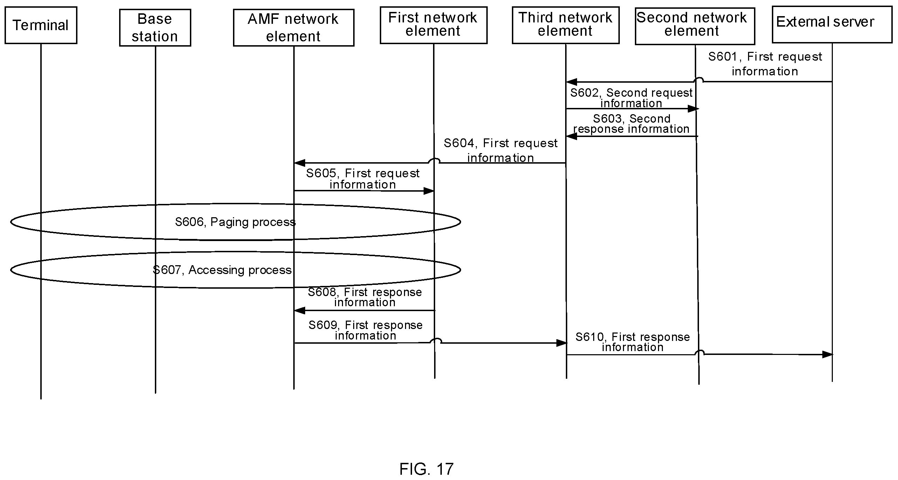

In some embodiments, a transmission method for ambient backscatter is provided based on the architecture of the communication system shown in FIG. 13. FIG. 17 is a flowchart of yet another transmission method for ambient backscatter according to some exemplary embodiments. As shown in FIG. 17, the transmission method for ambient backscatter includes S601 to S610.

In S601, the external server sends first request information to the third network element.

The first request information includes one or more of: information related to the terminal, configuration information for data requested to be reported by the terminal, configuration information for data requested to be stored by the terminal, or configuration information for a behavior requested to be performed by the terminal.

In S602, the third network element sends second request information to the second network element.

The second request information includes an identification of the terminal. In some embodiments, the second request information may further include a service type.

In S603, the second network element sends second response information for responding to the second request information to the third network element.

The second response information includes one or more of: position information of the terminal, information of a base station accessed by the terminal, information of a cell accessed by the terminal, information of an access and mobility management function network element accessed by the terminal, state information of the terminal, or capability information of the terminal.

In S604, the third network element sends first request information to the access and mobility management function network element.

In some examples, the third network element selects the access and mobility management function network element based on the second response information for the second request information, and sends the first request information to the access and mobility management function network element.

In S605, in a case where the access and mobility management function network element judges that service type information is an ambient backscatter service, the access and mobility management function network element sends the first request information to the first network element.

In S606, the first network element initiates a paging process.

The detailed description of the paging process can refer to the description above, which will not be repeated herein.

In S607, the first network element initiates an accessing process.

The detailed description of the accessing process can refer to the description above, which will not be repeated herein.

A number of time(s) of initiating the paging process and the accessing process are not limited in the embodiments of the present disclosure.

In S608, the first network element sends the first response information to the access and mobility management function network element.

In S609, the access and mobility management function network element sends the first response information to the third network element.

In S610, the third network element sends the first response information to the external server.

In some embodiments, the third network element converts the first response information into information that may be identified by the external server and then sends the converted information to the external server.

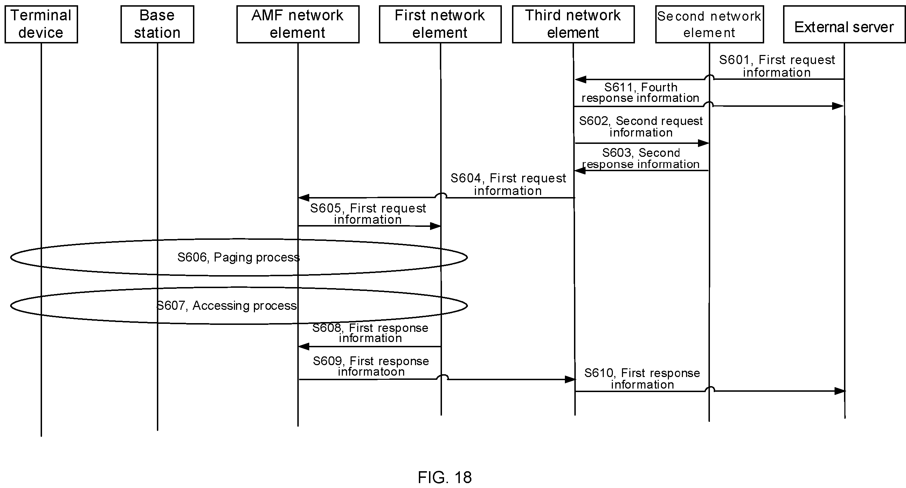

In some embodiments, based on the method shown in FIG. 17, as shown in FIG. 18, after S601, the above method may further include S611.

In S611, the third network element sends fourth response information to the external server.

The fourth response information includes one or more of the following information: a success indication, a failure indication, or a reason for response failure.

In this way, on the architecture of the communication system shown in FIG. 13, the external server can perform data transmission with the terminal, so as to perform the ambient backscatter service.

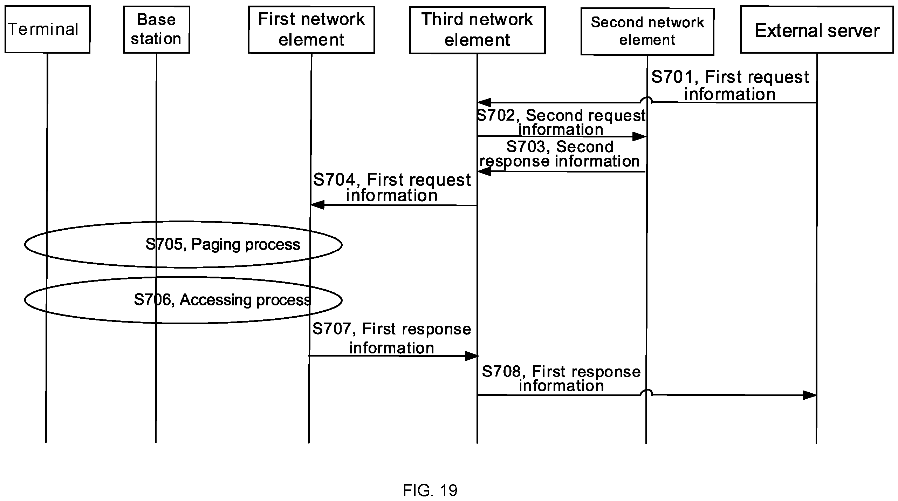

In some embodiments, based on the architecture of the communication system shown in FIG. 14, a transmission method for ambient backscatter is provided by taking the first network element being provided with the first function and the function of the access and mobility management function network element, the second network element being provided with the second function, and the third network element being provided with the third function as an example. FIG. 19 is a flowchart of yet another transmission method for ambient backscatter according to the exemplary embodiments. As shown in FIG. 19, the transmission method for ambient backscatter includes S701 to S708.

In S701, the external server sends first request information to the third network element.

In S702, the third network element sends second request information to the second network element.

In S703, the second network element sends second response information for responding to the second request information to the third network element.

The second response information includes one or more of: position information of the terminal, information of a base station accessed by the terminal, information of a cell accessed by the terminal, information of the first network element accessed by the terminal, state information of the terminal, or capability information of the terminal.

In S704, the third network element sends the first request information to the first network element.

In some examples, the third network element selects the first network element based on the second response information for the second request information, and sends the first request information to the first network element.

In some embodiments, after receiving the first request information from the external server, the third network element converts the first request information into information that complies with an internal format of the core network. That is, the first request information sent from the third network element to the first network element is information whose format is converted.

In S705, the first network element initiates a paging process.

In S706, the first network element initiates an accessing process.

In S707, the first network element sends first response information to the third network element.

In S708, the third network element sends the first response information to the external server.

In some embodiments, the third network element converts the first response information into information that may be identified by the external server and then sends the converted information to the external server.

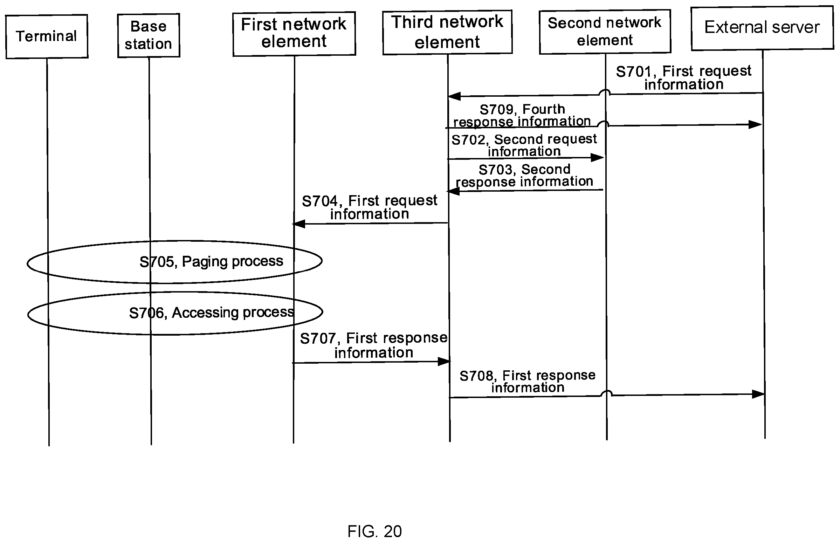

In some embodiments, as shown in FIG. 20, after S701, the above method further includes S709.

In S709, the third network element sends fourth response information to the external server.

The fourth response information includes one or more of the following information: a success indication, a failure indication, or a reason for response failure.

In this way, on the architecture of the communication system shown in FIG. 14, the external server can perform data transmission with the terminal, so as to perform the ambient backscatter service.

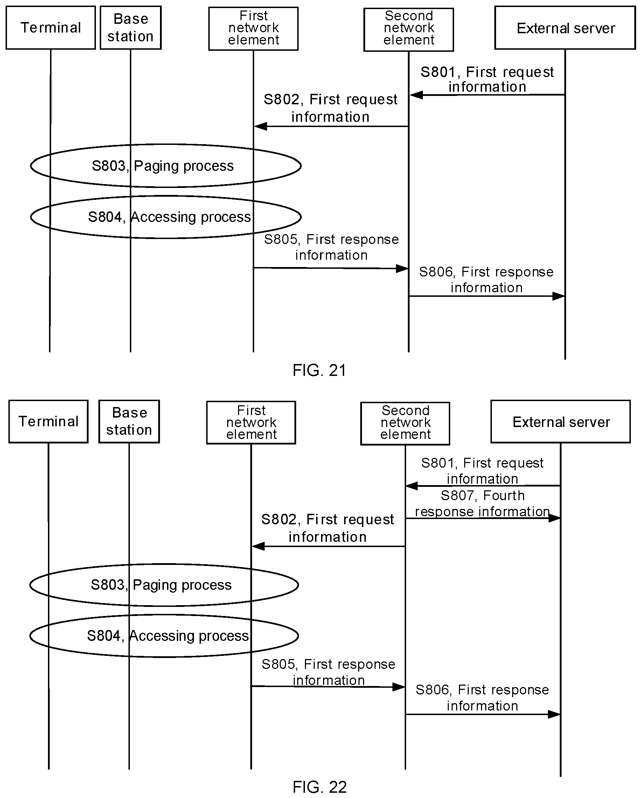

In some embodiments, based on the architecture of the communication system shown in FIG. 15, a transmission method for ambient backscatter is provided by taking the first network element being provided with the first function and the function of the access and mobility management function network element, the second network element being provided with the second function and the third function as an example. FIG. 21 is a flowchart of yet another transmission method for ambient backscatter according to some exemplary embodiments. As shown in FIG. 21, the transmission method for ambient backscatter includes S801 to S806.

In S801, the external server sends first request information to the second network element.

In S802, the second network element sends the first request information to the first network element.

In S803, the first network element initiates a paging process.

In S804, the first network element initiates an accessing process.

In S805, the first network element sends first response information to the second network element.

In S806, the second network element sends first response information to the external server.

In some embodiments, the second network element converts the first response information into information that may be identified by the external server and then sends the converted information to the external server.

In some embodiments, based on the method shown in FIG. 21, as shown in FIG. 22, after S801, the above method further includes S807.

In S807, the second network element sends fourth response information to the external server.

The fourth response information includes one or more of the following information: a success indication, a failure indication, or a reason for response failure.

In this way, on the architecture of the communication system shown in FIG. 15, the external server can perform data transmission with the terminal, so as to perform the ambient backscatter service.

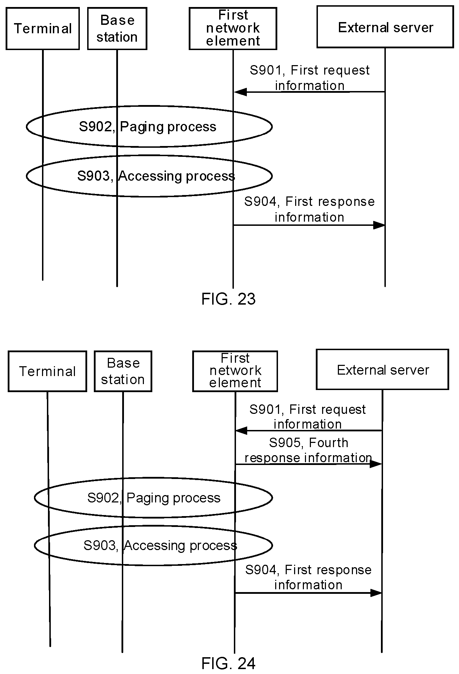

In some embodiments, a transmission method for ambient backscatter is provided based on the architecture of the communication system shown in FIG. 16. FIG. 23 is a flowchart of yet another transmission method for ambient backscatter according to some exemplary embodiments. As shown in FIG. 23, the transmission method for ambient backscatter includes S901 to S904.

In S901, the external server sends first request information to the first network element.

In S902, the first network element initiates a paging process.

In S903, the first network element initiates an accessing process.

In S904, the first network element sends first response information to the external server.

In some embodiments, the first network element converts a UE message fed back from the terminal and the first response information for the first request information into information that may be identified by the external server and then sends the converted information to the external server.

In some embodiments, based on the method shown in FIG. 23, as shown in FIG. 24, after S901, the above method further includes S905.

In S905, the first network element sends fourth response information to the external server.

The fourth response information includes one or more of the following information: a success indication, a failure indication, or a reason for response failure.

In this way, on the architecture of the communication system shown in FIG. 16, the external server can perform data transmission with the terminal, so as to perform the ambient backscatter service.

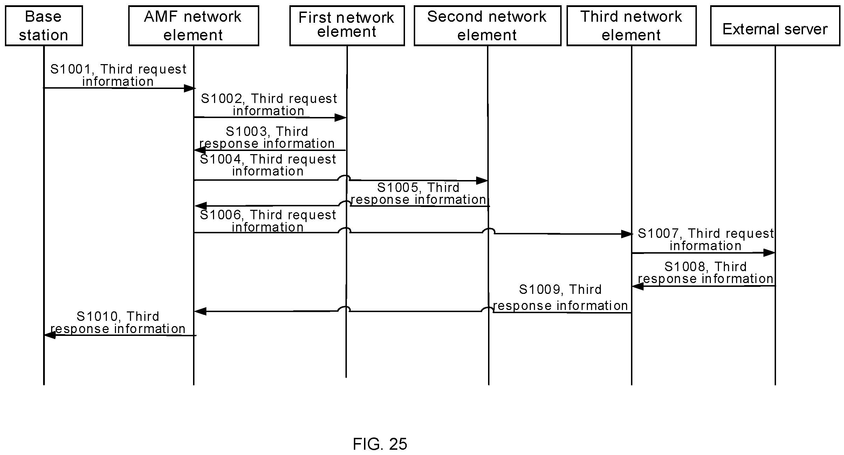

In some embodiments, yet another transmission method for ambient backscatter is provided based on the architecture of the communication system shown in FIG. 13. FIG. 25 is a flowchart of yet another transmission method for ambient backscatter according to some exemplary embodiments. As shown in FIG. 25, the transmission method for ambient backscatter includes S1001 to S1010.

In S1001, in a case where a base station finds a new terminal, the base station sends third request information to an access and mobility management function network element.

The new terminal refers to a terminal whose terminal information is not stored in the base station.

The third request information is used to request to store relevant information of the new terminal. The third request information includes one or more of: an indication that a position of a terminal has been updated, position information of the new terminal, information of a cell accessed by the new terminal, information of a base station accessed by the new terminal, information of a mobility management network element accessed by the new terminal, state information of the new terminal, capability information of the new terminal, and indication of the new terminal.

In S1002, the access and mobility management function network element sends the third request information to the first network element. Correspondingly, the first network element receives the third request information.

In S1003, the first network element sends third response information to the access and mobility management function network element.

The third response information carries a success indication or a failure indication, and is used to respond to the third request information.

For example, in a case where the first network element successfully stores the relevant information of the new terminal, the first network element sends the third response information carrying a success indication. Alternatively, in the case where the first network element fails to successfully store the relevant information of the new terminal, the first network element sends the third response information carrying a failure indication.

In S1004, the access and mobility management function network element sends the third request information to the second network element. Correspondingly, the second network element receives the third request information.

In S1005, the second network element sends the third response information to the access and mobility management function network element.

For example, in a case where the second network element successfully stores the relevant information of the new terminal, the second network element sends the third response information carrying a success indication. Alternatively, in the case where the second network element fails to successfully store the relevant information of the new terminal, the second network element sends the third response information carrying a failure indication.

In S1006, the access and mobility management function network element sends the third request information to the third network element. Correspondingly, the second network element receives the third request information.

In S1007, the third network element sends the third request information to the external server.

It can be understood that the third request information sent from the third network element to the external server is third request information whose message format is converted.

In S1008, the external server sends the third response information to the third network element. Correspondingly, the third network element receives the third response information from the external server.

For example, in a case where the third network element successfully stores the relevant information of the new terminal, the third network element sends the third response information carrying a success indication. Alternatively, in a case where the third network element fails to successfully store the relevant information of the new terminal, the third network element sends the third response information carrying a failure indication.

In S1009, the third network element sends the third response information to the access and mobility management function network element. Correspondingly, the access and mobility management function network element receives the third response information.

For example, in a case where the third response information sent from the external server to the third network element carries a failure indication, the third response information sent from the third network element to the access and mobility management function network element also carries the failure indication. Alternatively, in a case where the third response information sent from the external server to the third network element carries a success indication, the third response information sent from the third network element to the access and mobility management function network element also carries the success indication.

In S1010, the access and mobility management function network element sends the third response information to the base station. Correspondingly, the base station receives the third response information.

For example, in a case where the third response information sent from the third network element to the access and mobility management function network element carries the failure indication, the third response information sent from the access and mobility management function network element to the base station also carries the failure indication. Alternatively, in a case where the third response information sent from the third network element to the access and mobility management function network element carries the success indication, the third response information sent from the access and mobility management function network element to the base station also carries the success indication.

It can be understood that the embodiments shown in FIG. 25 above are only examples. For example, if the architecture of the communication system shown in FIG. 14 is taken as a basis, in a case where the first network element is provided with the function of the access and mobility management function network element and the first function, the operations implemented by the access and mobility management function network element shown in FIG. 25 may also be implemented by the first network element. Similarly, if the architecture of the communication system shown in FIG. 15 is taken as a basis, in the case where the second network element is provided with the third function, the operations implemented by the third network element shown in FIG. 25 may also be implemented by the second network element, and so on, which will not be repeated herein.

In this way, when the base station finds a new terminal (such as an ambient backscatter terminal), relevant network elements in the core network and the external server are enabled to store the relevant information of the new terminal through the environment transmission method shown in FIG. 25. In this way, the relevant network elements in the core network element and the external server can trigger a paging process and an accessing process for the new terminal.

The solutions provided in the embodiments of the present disclosure are introduced above from the perspective of methods. A transmission apparatus for ambient backscatter is further illustrated below, and is used to perform the transmission method for ambient backscatter in any of the above embodiments and possible implementations thereof. It can be understood that, in order to implement the above functions, the transmission apparatus for ambient backscatter includes corresponding hardware structures and/or software modules for implementing various functions. Those skilled in the art should easily realize that the present disclosure can be implemented in the form of hardware or a combination of hardware and computer software in combination with algorithms and steps described in the embodiments of the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

The embodiments of the present disclosure may divide the transmission apparatus for ambient backscatter into functional modules according to the above method embodiments. For example, division of each functional modules may be performed corresponding to each function, or two or more functions may be integrated into one functional module. The above integrated module may be implemented in the form of hardware, or may be implemented in the form of software. It should be noted that the division of the modules in the embodiments of the present disclosure is illustrated, which is only a logical functional division, and there may be other division manners in actual implementation. The following is illustrated by taking an example of a division of each functional module corresponding to each function.

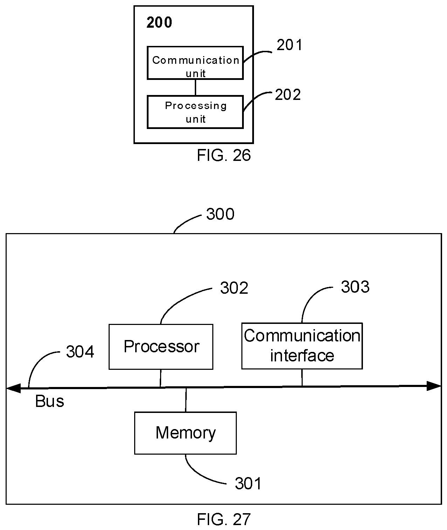

FIG. 26 is a structural diagram of a transmission apparatus for ambient backscatter according to some embodiments. Referring to FIG. 26, the transmission apparatus 200 for ambient backscatter includes a communication unit 201. In some embodiments, the transmission apparatus 200 for ambient backscatter further includes a processing unit 202.

The communication unit 201 is configured to transmit information related to an ambient backscatter service.

In some embodiments, the processing unit 202 is configured to implement one or more of the following functions: generating or decoding a data packet related to the ambient backscatter service; triggering a process related to the ambient backscatter service; transmitting the information related to the ambient backscatter service between the core network and a terminal; providing auxiliary information related to the ambient backscatter service to a base station; authenticating and/or authorizing a terminal that supports an ambient backscatter function; encrypting and/or decrypting the data packet; providing security information; providing connection management for the ambient backscatter service; and providing, for an access network, an interface service to access the core network.

In some embodiments, the communication unit 201 is specifically configured to send the auxiliary information related to the ambient backscatter service to the base station, where the auxiliary information related to the ambient backscatter service includes one or more of the following functions: information of a time domain resource occupied for sending the auxiliary information or a paging message, information of a frequency domain resource occupied for sending the auxiliary information or the paging message, information related to a terminal that is paged or receives the auxiliary information, network information, the security information, configuration information of a broadcast mode, access configuration information, and a format of response information.

In some embodiments, the communication unit 201 is further configured to receive a user equipment (UE) message, where the UE message includes information related to a terminal and data information.

In some embodiments, the communication unit 201 is further configured to send first request information to the terminal, where the first request information is used to request the terminal to receive or send data related to the ambient backscatter service.

In some embodiments, the communication unit 201 is further configured to receive first response information for responding to the first request information and from the terminal.

In some embodiments, the communication unit 201 is provided with a service interface for communicating with an access and mobility management function network element.

In some embodiments, the transmission apparatus 200 for ambient backscatter is integrated with the access and mobility management function network element; or the transmission apparatus 200 for ambient backscatter and the access and mobility management function network element are independent from each other.

In some embodiments, a protocol stack of the transmission apparatus 200 for ambient backscatter includes one or more of: L2 layer, an Internet protocol (IP) layer, a transmission control protocol (TCP) layer, a hypertext transfer protocol/2 (HTTP/2) layer, an Internet of Things protocol application layer, and an Internet of Things protocol layer.

In some embodiments, the processing unit 202 is further configured to implement one or more of the following functions: maintaining position information of a terminal; maintaining information of a base station accessed by the terminal; maintaining information of a cell accessed by the terminal; maintaining information of an access and mobility management function network element accessed by the terminal; maintaining state information of the terminal; and maintaining capability information of the terminal.

In some embodiments, the communication unit 201 is further configured to receive second request information, where the second request information is used to query information related to the terminal; and send second response information for responding to the second request information, where the second response information includes one or more of: the position information of the terminal, the information of the base station accessed by the terminal, the information of the cell accessed by the terminal, the information of the access and mobility management function network element accessed by the terminal, the state information of the terminal, and the capability information of the terminal.

In some embodiments, the processing unit 202 is further configured to implement one or more of the following functions: receiving information from an external server related to the ambient backscatter service; sending information to the external server; providing information performed security protection to the core network; and providing the external server with information about a network capability and an event.

In some embodiments, the communication unit 201 is further configured to receive first request information from an external server, where the first request information is used to request a terminal to receive or send data related to the ambient backscatter service. The first request information includes one or more of: information related to the terminal, configuration information for data requested to be reported by the terminal, configuration information for data requested to be stored by the terminal, or configuration information for a behavior requested to be performed by the terminal.

In some embodiments, the communication unit 201 is further configured to send first response information for responding to the first request information to the external server. The first response message includes one or more of: information related to the terminal, reported data, a success indication or a failure indication.

In a case where the functions of the above-mentioned integrated modules are implemented in the form of hardware, a possible structure of a communication apparatus is further provided in the embodiments of the present disclosure, and the communication apparatus is configured to perform the transmission method for ambient backscatter provided in the embodiments of the present disclosure. As shown in FIG. 27, the communication apparatus 300 includes a communication interface 303, a processor 302, and a bus 304. In some embodiments, the communication apparatus further includes a memory 301.

The processor 302 may be any of various exemplary logical blocks, modules and circuits described for implementing or performing the embodiments of the present disclosure. The processor 302 may be a central processor, a general-purpose processor, a digital signal processor, an application specific integrated circuit, a field programmable gate array, or other programmable logic components, a transistor logic component, a hardware assembly, or any combination thereof. The processor 302 may implement or perform various exemplary logical blocks, modules and circuits described in combination with the embodiments of the present disclosure. The processor 302 may also be a combination that implements computing functions, for example, the processor 302 includes a combination of one or more microprocessors, a combination of a DSP (digital signal processor) and a microprocessor, or the like.

The communication interface 303 is configured to connect to other devices through a communication network. The communication network may be the Ethernet, a wireless access network, a wireless local area network (wireless local area network, WLAN), or the like.

The memory 301 may be a read-only memory (read-only memory, ROM) or other types of static storage devices that can store static information and instructions, a random access memory (random access memory, RAM), or other types of dynamic storage devices that can store information and instructions, or an electrically erasable programmable read-only memory (electrically erasable programmable read-only memory, EEPROM), a magnetic disk storage medium or any other magnetic storage devices, or any other medium that can be used to carry or store desired program codes with a form of instructions or data and can be accessed by a computer, which is not limited thereto.

As an example, the memory 301 may exist independently from the processor 302, and the memory 301 may be connected to the processor 302 through the bus 304 for storing instructions or program codes executable by the processor 302. When the processor 302 invokes and executes the instructions or program codes stored in the memory 301, the processor 302 may implement the transmission method for ambient backscatter shown in the embodiments of the present disclosure.

In another example, the memory 301 may be integrated with the processor 302.

The bus 304 may be an extended industry standard architecture (extended industry standard architecture, EISA) bus, or the like. The bus 304 may be classified as an address bus, a data bus, a control bus, or the like. For ease of representation, only one bold line is used in FIG. 27 for representing the bus 304, which however does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed on a computer (e.g., the above-mentioned communication apparatus, the processor of the communication apparatus or the ambient backscatter function module), enable the computer to perform the transmission method for ambient backscatter as described in any one of the above embodiments. It should be understood that a specific form of the computer is not limited in the present disclosure.

In some examples, the above-mentioned computer-readable storage medium may include, but not limited to: a magnetic storage device (e.g., a hard disk, a floppy disk, or a magnetic tape, etc.), an optical disk (e.g., a compact disk (Compact Disk, CD), a digital versatile disk (Digital Versatile Disk, DVD), etc.), a smart card and a flash memory device (e.g., an erasable programmable read-only memory (Erasable Programmable Read-Only Memory, EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is shown in some embodiments of the present disclosure, when the computer program product is run on a computer, the computer is enabled to perform the transmission method for ambient backscatter as described in any one of the above embodiments.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A transmission method for ambient backscatter, comprising:
transmitting, by an ambient backscatter function module in a core network, information related to an ambient backscatter service.

2. The method according to claim 1, wherein the ambient backscatter function module is provided with one or more of following functions:
generating or decoding a data packet related to the ambient backscatter service;
triggering a process related to the ambient backscatter service;
transmitting the information related to the ambient backscatter service between the core network and a terminal;
providing auxiliary information related to the ambient backscatter service to a base station;
authenticating and/or authorizing a terminal that supports an ambient backscatter function;
encrypting and/or decrypting the data packet;
providing security information;
providing connection management for the ambient backscatter service; and
providing, for an access network, an interface service to access the core network.

3. The method according to claim 2, wherein transmitting, by the ambient backscatter function module, the information related to the ambient backscatter service comprises:
sending, by the ambient backscatter function module, the auxiliary information related to the ambient backscatter service to the base station, wherein the auxiliary information related to the ambient backscatter service includes one or more of following functions: information of a time domain resource occupied for sending the auxiliary information or a paging message, information of a frequency domain resource occupied for sending the auxiliary information or the paging message, information related to a terminal that is paged or receives the auxiliary information, network information, the security information, configuration information of a broadcast mode, access configuration information, and a format of response information.

4. The method according to claim 3, further comprising:
receiving, by the ambient backscatter function module, a user equipment (UE) message, wherein the UE message includes data information and information related to a terminal.

5. The method according to claim 2, wherein transmitting, by the ambient backscatter function module, the information related to the ambient backscatter service comprises:
sending, by the ambient backscatter function module, first request information to the terminal, wherein the first request information is used to request the terminal to receive or send data related to the ambient backscatter service.

6. The method according to claim 5, further comprising:
receiving, by the ambient backscatter function module, first response information for responding to the first request information and from the terminal.

7. The method according to claim 2, wherein the ambient backscatter function module is provided with a service interface for communicating with a mobility management network element.

8. The method according to claim 7, wherein the ambient backscatter function module is integrated with the mobility management network element; or the ambient backscatter function module and the mobility management network element are independent from each other.

9. The method according to claim 2, wherein a protocol stack of the ambient backscatter function module includes one or more of: L2 layer, Internet protocol (IP) layer, transmission control protocol (TCP) layer, hypertext transfer protocol/2 (HTTP/2) layer, Internet of Things protocol application layer, and Internet of Things protocol layer.

10. The method according to claim 1, wherein the ambient backscatter function module is provided with one or more of following functions:
maintaining position information of a terminal;
maintaining information of a base station accessed by the terminal;
maintaining information of a cell accessed by the terminal;
maintaining information of a mobility management network element accessed by the terminal;
maintaining state information of the terminal; and
maintaining capability information of the terminal.

11. The method according to claim 10, wherein transmitting, by the ambient backscatter function module, the information related to the ambient backscatter service comprises:
receiving, by the ambient backscatter function module, second request information, wherein the second request information is used to query information related to the terminal;
sending, by the ambient backscatter function module, second response information for responding to the second request information, wherein the second response information includes one or more of: the position information of the terminal, the information of the base station accessed by the terminal, the information of the cell accessed by the terminal, the information of the mobility management network element accessed by the terminal, the state information of the terminal, or the capability information of the terminal.

12. The method according to claim 10, wherein transmitting, by the ambient backscatter function module, the information related to the ambient backscatter service comprises:
receiving, by the ambient backscatter function module, third request information, wherein the third request information is used to request to store relevant information of a new terminal;
sending, by the ambient backscatter function module, third response information for responding to the third request information, wherein the third response information carries a success indication or a failure indication.

13. The method according to claim 1, wherein the ambient backscatter function module is provided with one or more of following functions:
receiving information from an external server related to the ambient backscatter service;
sending information to the external server;
providing information performed security protection to the core network; and
providing the external server with information about a network capability and an event.

14. The method according to claim 13, wherein transmitting, by the ambient backscatter function module, the information related to the ambient backscatter service comprises:
receiving, by the ambient backscatter function module, first request information from the external server, wherein the first request information is used to request a terminal to receive or send data related to the ambient backscatter service.

15. The method according to claim 5 or 14, wherein the first request information comprises one or more of: information related to the terminal, configuration information for data requested to be reported by the terminal, configuration information for data requested to be stored by the terminal, or configuration information for a behavior requested to be performed by the terminal.

16. The method according to claim 14, further comprising:
sending, by the ambient backscatter function module to the external server, first response information for responding to the first request information.

17. The method according to claim 6 or 16, wherein the first response message includes one or more of: information related to the terminal, reported data, a success indication or a failure indication.

18. The method according to claim 13, wherein transmitting, by the ambient backscatter function module, the information related to the ambient backscatter service comprises:
sending, by the ambient backscatter function module, third request information to the external server, wherein the third request information is used to request to store related information of a new terminal;
receiving, by the ambient backscatter function module, third response information from the external server, wherein the third response information carries a success indication or a failure indication, and is used to respond to the third request information.

19. The method according to claim 12 or 18, wherein the third request information includes an indication that a position of a terminal has been updated, position information of the new terminal, information of a cell accessed by the new terminal, information of a base station accessed by the new terminal, information of a mobility management network element accessed by the new terminal, state information of the new terminal, capability information of the new terminal, and indication information of the new terminal.

20. A communication apparatus, comprising: a processor and a memory; wherein
the memory stores instructions executable by the processor;
when the processor is configured to execute the instructions, the communication apparatus is enabled to perform the method according to any one of claims 1 to 19.

21. A computer-readable storage medium, wherein the computer-readable storage medium comprises computer instructions that, upon being run on a computer, enable the computer to perform the method according to any one of claims 1 to 19.
